**Europäisches Patentamt**

**European Patent Office**

**Office européen des brevets**

(19)

(11) Publication number : **0 680 187 A2**

(12) **EUROPEAN PATENT APPLICATION**

(21) Application number : **95301347.1**

(22) Date of filing : **02.03.95**

(51) Int. Cl.⁶ : **H04L 29/06**

(30) Priority : **03.03.94 GB 9404112**

(43) Date of publication of application :
**02.11.95 Bulletin 95/44**

(84) Designated Contracting States :
**DE FR GB**

(71) Applicant : **International Business Machines
Corporation
Old Orchard Road
Armonk, N.Y. 10504 (US)**

(72) Inventor : **Gover, Paul
131 Main Road,
Middleton Cheney
Banbury, Oxfordshire OX17 2PW (GB)**
Inventor : **Visser, Mary
34 Russell Terrace
Leamington Spa, Warwickshire CV31 1EZ (GB)**

(74) Representative : **Lloyd, Richard Graham
IBM (UK) Ltd,
UK Intellectual Property Department,
Hursley Park
Winchester, Hampshire SO21 2JN (GB)**

(54) Security device for data communications networks.

(57) A security device (warden) for data communications networks is disclosed. It is a new component in a Message Handling System (MHS), which performs all the X.400 security functions, while not performing any other X.400 functions. This allows a MHS to be constructed in which the X.400 components provide all of the electronic mail functions, except security, while the warden provides all of the security functions. The warden (200) sits in an association, connected to the two MHS components (210, 220) at each end of that association and it protects the non-secure MHS component (210), while the secure component (220) can be either non-secure but protected by another warden or a component which implements the security functions directly. The warden acts with and reacts to one component as if it were the other. This means the MHS components do not notice that there is a non-X.400 component in the network.

FIG. 1A

FIG. 1B

EP 0 680 187 A2

This invention relates to security in data communications networks.

A data communications network consists of a number of network switches, or nodes, distributed in different locations, interconnected by transmission links. These links can be for example wires, cables, radio, satellite, or fibre optics facilities. A network can accommodate a large number of users up to the limit a switch can handle. Users who desire to communicate must thus have their respective traffic routed or switched, by the network nodes along an appropriate routing path.

Many geographically distributed networks are very large, consisting of hundreds and even thousands of nodes and others could be very small like a local area network. Thus often data traffic may have to traverse several networks. Each network uses a defined communication protocol to provide a standard way of allowing their users to communicate through the network. This requires that each node of the network has a communication system which is able to support such a communication protocol for the data interchange. But the number of communication systems which support incompatible network-control protocols used in the different networks is still high, consequently the different networks are interconnected via so called gateways which provide the necessary protocol translation and interfacing between disparate networks of possibly different bit-rates as well as different message formats.

Therefore the need to establish communication standards has become of paramount importance. To address the interoperability problem among the different network-control protocols several entities have contributed to development of standards. Among them, the International Organization for Standardization (ISO) and Consultative Committee for International Telegraph and Telephone (CCITT) standards body have developed a common network architecture called the Open System Interconnection (OSI) model. Another de-facto standard is IBM System Network Architecture (SNA).

Nowadays, the increasingly widespread use of electronic mail has given rise to the need in some areas for security procedures for electronic message transmission. For example, in such communication the sender may desire to verify to the receiver the source and the original content of a transmitted document, reducing the risks that unauthorized parties masquerading as authorized users can intercept and read or modify mail items.

Unfortunately, most of the existing standard protocols define as optional the security elements required for software and nodes of the network have not been implemented to comply in full with the standard. This, added to the absence of a unique standard network protocol, increases the difficulties of providing a secure communications network. In fact a large number of communication systems cannot provide to the user a complete set of security functions such as the authentication of the sender, or the possibility to cipher/decipher the contents of the message. Moreover, a user of a secure network is unable to use the security capability to communicate with a non-secure network.

This invention is directed to the problem of improving security in data communications networks, in which messages are exchanged according to a predetermined standard in which security functions are not necessarily mandatory.

One solution to this problem is to restrict user access to nodes which carry out the functions needed to provide the security elements of service. This means that a user is able to interchange messages only with a reduced set of network users, decreasing the utility of his electronic mail system.

Another solution is to modify the software of the node itself so that it carries out the functions required to provide the security elements of services. However, these modifications are complex, and may involve changes to many of the components of such software. If the developer of the software does not make the modifications, they must be made by other parties. This may result in problem with maintaining the modifications when the software is improved or changed, and can cause disputes over the true source of defects and error in the software's operation. Furthermore, building a secure network requires all the nodes to support the security elements of service and often the recommendations of a standard do not define in detail all the processes needed to provide the elements of service: the details are left to be decided by a security policy which is chosen by the user outside the scope of the recommendations. This means that some nodes might not use the same security elements as others, resulting in conflict or incorrect and thus insecure operation.

Moreover, it is difficult to make a wide spread network physically secure. In fact, no data system may be made secure without physical protection of some part of the equipment. In particular performing data communications usually requires access to a personal computer or workstation forming either the initial or final node of the network, which often contains the functions needed to provide the security elements to data. Therefore, on one hand the equipment itself must be protected from intrusion, but on the other hand the physical protection cannot be too strong, because the users need relatively easy access in order to make use of them.

In accordance with the present invention, there is provided a security device adapted for connection between a first node and a second node in a data communications network supporting a predefined standard, the device being responsive to control data in messages passed between the first node and the second node to perform on behalf of the first node security functions defined by a security policy agreed between the users of the first and second nodes , so that the combination of the device and the first node appears to the second node as a node of the network in which the security functions are implemented according to the security policy.

In some ways, the security device is similar to a gateway. However, unlike a gateway, the device is connected between components in the same network, so that it is not necessary to provide functions to translate from one communication standard to another. The security device provides the security elements of the services and lets the node perform the other, non-security elements of services without any changes to the software which manages the protected node. Particularly, the security elements are implemented according to a security policy which is a bilateral agreement agreed by two users of the network, the originator and the recipient of the transmitted data. Such security policy defines the choice of a set of rules which will be used by both the users to protect the data during the transmission. For example, they may agree to choose a mutual ciphering algorithm or to define some rules to create a digital signature to be appended to the transmitted data.

This arrangement improves the security of data transmission in a network, because the security device can be easily locked and protected, keeping it separate from the node itself, improving the physical security of the network.

Some difficulties arise since the security device does not allow more powerful and useful security policies which require input from the user.

In another embodiment of the invention, the security device comprises means being responsive to store and forward the received messages.

This embodiment allows the security device to become a store and forward node so that it is possible to adopt a security policy which requires a user to answer a question. This improves the security of the network, avoiding the need to stop the security device communication processing to wait for the user's answer.

However, other difficulties arise in providing the set of security elements depending on the level of security required by the sender or the receiver of the message.

In one arrangement of the invention, the security device is used in a network wherein messages are interchanged according to a security policy comprising a selection of security functions defined in a standard.

This means that the sender and the receiver use the same type of security services, in respect of the security level required, avoiding security incompatibility in the interchange information between them causing a reduction of the security of the whole network.

Other difficulties arise in providing different sets of security services according to different security requirements as required by the protocol of a network used by the sender and the receiver to interchange the message.

In a preferred arrangement of the invention, the security device comprises programmable means responsive to control data in messages passed between the first node the second node to perform the security functions. Moreover, such programmable means can include a control file, in which security elements of the standard are stored, to implement the security functions according to the standard. The security device can also comprise means enabling a user to edit the control file to modify the security elements, to implement the security functions according to a different standard.

This means that the same security device might be used, by simply modifying the control file, to implement a different set of security elements, in different types of networks.

The problems of security of data transmission are more evident in a network architecture which operates according to a standard which is not completely fixed, such as the one described in the OSI model, which defines the X.400 recommendation, as hereafter described. In this case, X.400 elements of services related to security functions are mostly optional and many networks which adopt the standard choose not to carry out the processes required to provide them.

To solve the specific problems involved in a X.400 network, in a preferred form of the invention, the security device is used in a network wherein messages are interchanged according to a security policy which comprise a selection of security functions defined according to the X.400 standard.

Preferably, a data communications network comprises a security device connected between a first node and a second node of the network, wherein said first node is a node which separates the user from the rest of the network. This allows to protect the sender and or the receiver of a non-secure network, avoiding the need to protect every single node of the non-secure network itself.

In a particularly preferred arrangement of the invention, a data communications network comprises a security device connected between a first node and a second node wherein said first node is a gateway. This allows to protect a whole different secure network which communicates with a non-secure one through a gateway. In fact an unprotected gateway could be a good way to perform unauthorized intrusion in the secure network.

An embodiment of the present invention will now be described with reference to the accompanying drawings; wherein:

Figures 1A and 1B depict a Message Handling System.

Figure 2 depicts a node protected by a security device.

Figure 3 depicts a block diagram of message processing in a security device.

Figure 4 depicts security devices directly connected to user agents.

Figure 5 depicts a warden attached to a gateway protecting the user of a proprietary network.

The life of a data communications network can often be challenged by violation of security. Increasing attention is accordingly being given to protection against data loss, such as data interception, data deletion, change of message sequence, substitution of messages and unauthorized connection. In general, a network-wide security management structure must provide appropriate mechanisms for the following:

- User identification and authentication: recognizing and verifying the claimed identity of a user (or server);
- Resource access controls: allowing resource usage only by those suitable authorized;
- Confidentiality: Including secure communication and the management of keys for ciphering;
- Data integrity: the preservation of data from unauthorized changes;
- Security management.

Numerous networks are currently operating around the world, and most of them differ in technical design, such as the transmission media used, the naming and routing algorithms employed and the transmission protocols used. The main goal of this invention is to improve security in a non-secure network; thus, for this reason, the embodiment of the invention will be described as implemented in just a standard network architecture, and the OSI model is chosen in the present case.

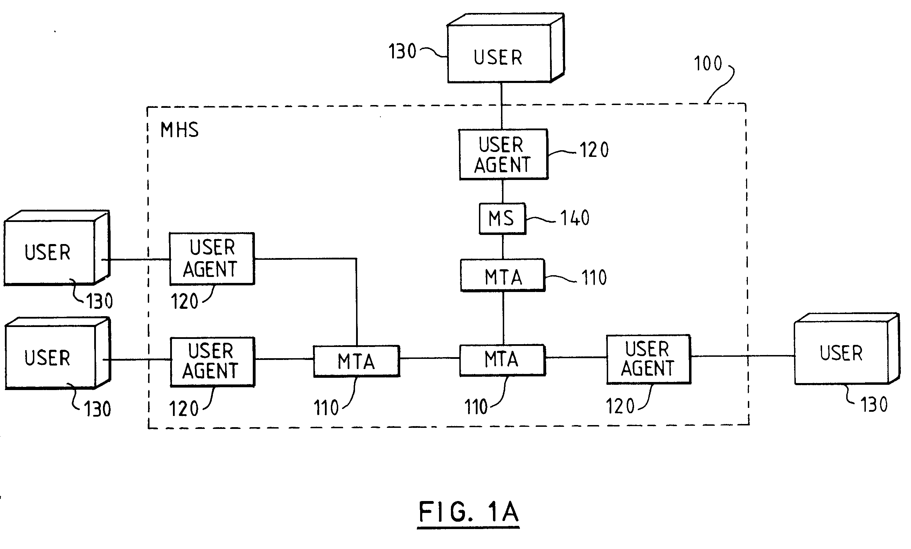

Referring now to figure 1A, the OSI model defines a X.400 Message Handling System 100 which consists of a network of processing nodes and connections. The node are of three types, User Agent 120 (UA), Message store 140 (MS) and Message Transfer Agent 110 (MTA). Therefore, Message Handling System 100 consists of a set of connected MTAs 110 which transfer messages through the network. Message Handling System users 130 operate UAs 120. A group of UAs 120 can be connected to one MTA 110. The connections are known as associations. User 130 creates a message at UA 120, and commands UA 120 to submit it using the association with the connected MTA 110. MTA 110 stores the parts of the message until it is complete, and then returns confirmation of receipt to UA 120. MTA 110 is connected to at least one other MTA 110, usually several. It determines which association is responsible for sending the message towards its destination and uses it to send the message to other MTA 110 (forwarding). The receiving MTA 110 stores the message, and when complete, returns a confirmation. This process is known as store and forward operation. It repeats until the message arrives at the MTA 110 connected to the recipient UA 120. This MTA 110 now delivers the message using the association to UA 120. If UA 120 is not regularly connected to MTA 110, the system controllers may decide to add a Message Store 140 (MS) to MTA 110. This acts on behalf of UA 120; MTA 110 delivers to MS 140, which stores the message. When UA 120 later connects to MS 140, MS 140 transfers the message to UA. MTAs 110 and UAs 120 operate according to protocol specified in the CCITT Recommendations X.400 - X.420 (X.400) and other recommendations, which specify elements of service which define the services available to Message Handling System users 130, what functions these elements perform, and the data structures and processing needed to carry to the services. The recommendations classify these elements of service as either optional or mandatory requirements for any Message Handling System.

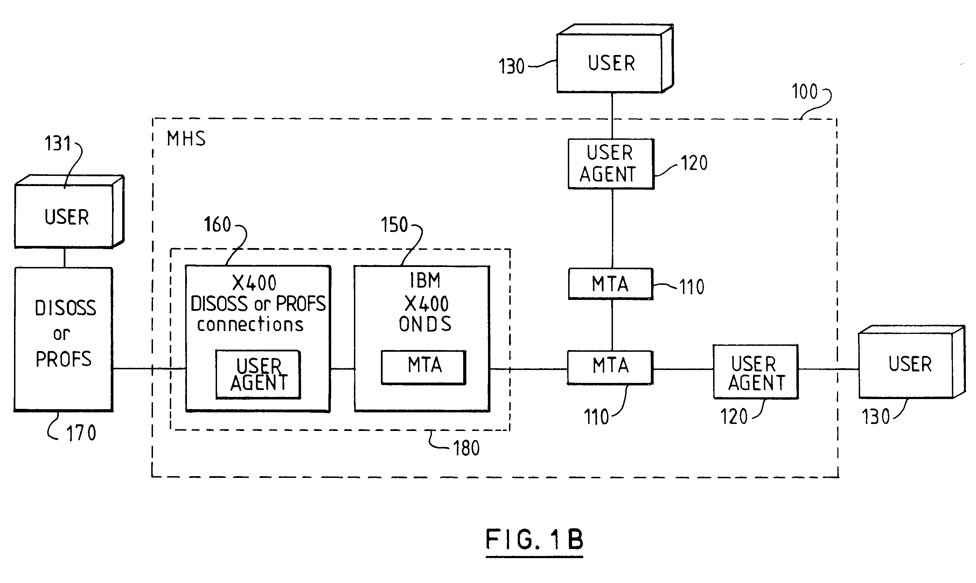

Figure 1B describes a X.400 Message Handling System 100 connected to a network 170 using a different communications protocol. IBM Open Network Distribution Services 150 (ONDS) gateway acts as a specialized MTA in an X.400 network to provide connection services to proprietary electronic mail systems. The Distributed Office Support System (DISOSS) or Professional Office System (PROFS) connections 160 with ONDS, provide an application level gateway to allow users 131 of DISOSS and PROFS network systems 170 to exchange messages with users 130 of public and private electronic mail facilities based on the X.400 recommendations.

X.400 defines many services; it groups these services in two classes: base services, which all X.400 software must provide and optional services. User groups, such as national governments, defined profiles which specify that conforming software must provide certain services from the optional class. Such government profiles are called GOSIP, from Government OSI Profiles, for instance: UK GOSIP or US GOSIP. The available software usually chooses to conform to some set of profiles. This means the software has to provide services from the base class, and a selection from the optional class, but none of the profiles of the available software includes the services to counter security threats. The NATO Standards Agreement STANAG 4406 defines a military profile which does include these services, but at present little available software conforms to it. This means that a secure Message Handling System cannot be built easily using existing software; thus it is necessary either to wait for new software to be written, or to modify existing available software.

X.400 defines several security threats, and services to counter them. It also defines several Message Handling System functions which will provide these services. X.400 allows the user to mark the data associated with elements of services as Critical for Submission, Critical for Transfer, Critical for Delivery, or other combinations of these. If a node receives an element of services for which it does not perform the required functions, and the element is critical for the operation in progress, the node must reject the operation. However, sometimes there is more than one way to provide a service. Three security profiles, S0, S1 and S2 define various levels of security function. The threats and services defined include:

| | |
|---|---|
| Masquerade: | pretending to be another user, pretending to send or receive mail, or pretending to be a Message Handling System component. Services provided: origin authentication (including a signature in mail) proof of submission or delivery (creating a signed record of submission or delivery) secure access management (exchanging credentials when making the first connection between components) |
| Message sequencing: | replaying, delaying or reordering messages. Services provided: message sequence integrity (including a signed message sequence number) |
| Modification of information: | modifying or destroying messages, changing addressing and other management information. Services provided: content integrity (generating a signed check sum for the mail) |
| Repudiation: | denying origin, submission or delivery. Services provided: non-repudiation of origin, submission or delivery (creating a signed record of origin, submission or delivery) |
| Leakage of information: | loss of confidentiality. Services provided: content confidentiality (ciphering) |
| Security labelling: | Services provided: message security labelling secure access management (setting context for permitted security labels) |

While the profiles (such as GOSIP) select which services the software must offer the user, they do not control which ones the user selects. In particular, X.400 expects the sender and receiver to share a common security policy. This defines the circumstances under which the sender and receiver select each service, and which Message Handling System security functions they use to provide those services. The security policy must be agreed between the two participants in the electronic mail. X.400 simplifies this by allowing a security policy to be registered and assigned a unique identifier (name). The sender quotes the security policy identifier in the message, and the recipient can then use this identifier to understand which functions the sender used, and the manner of their use. For example, the policy may indicate that the sender ciphered the message before sending it and also indicate how the recipient retrieves the key to decipher the message.

The warden is a new component in the Message Handling System. It is separate from all the other components. Its purpose is to perform all the X.400 security functions, while not performing any other X.400 functions. This allows a Message Handling System to be constructed in which the X.400 components provide none of the security functions, but all of the other electronic mail functions, while the warden provides all of the security functions and none of the electronic mail functions. This has two benefits:

the Message Handling System can be built using software which does not provide the security functions. This avoids using specially written or modified software;

the security functions are separated from the electronic mail functions.

OSI defines 7 layers of software and hardware to make a communicating network, as represented in table 1.

```
        7: Application   X.400
        6: Presentation data coding
        5: Session        long-term   end-to-end   communication
  paths
        4: Transport     end-to-end error detection and correction
        3: Network       end-to-end routing
        2: Data link      point-to-point
        1: Physical
```

Table 1

Physical: such as cables, plugs and sockets and signalling voltages and frequencies.

Data link: point-to-point links between network components and the signalling protocols used.

Network: using point-to-point links to build end-to-end links between two network components which might not be at opposite ends of the same link, and the signalling protocols used.

Transport: the end-to-end signalling used to detect and correct transmission errors in the network.

Session: the protocols to start, control, operate and finish a long-term end-to-end communication path through the network. For example, the rules for signalling the start, middle and end of a data transfer which is so large the network must transfer it in several pieces.

Presentation: the standard means to code data before transmission and decode it on reception, so that the meaning is maintained even though the sender and receiver may be using different computer systems. For example, the rules for coding numbers and character strings.

Application: the data constructions to build and interpret coded data to provide standard application services. For example, defining the character strings used in an electronic mail message.

X.400 defines electronic mail in terms of layer 7. It assumes the lower layers exist as part of an OSI stack of other software. An X.400 application does not need to use lower layers directly: it builds the data structures required by the X.400 layer 7 definitions, passes them to layer 6 to create the coded data, and then to layer 5 to send them across the session to the recipient. This structure allows a choice of software at each layer. In particular, the user can often change layers 1, 2 and 3 (that is, the transport mechanisms used) without changing layer 4 and above (that is, without changing the network). For example, if the session layer uses the UNIX X/Open Transport Interface (XTI), this may allow the network to operate over UNIX TCP/IP connections, or OSI X.25 connections, or IBM SNA connections.

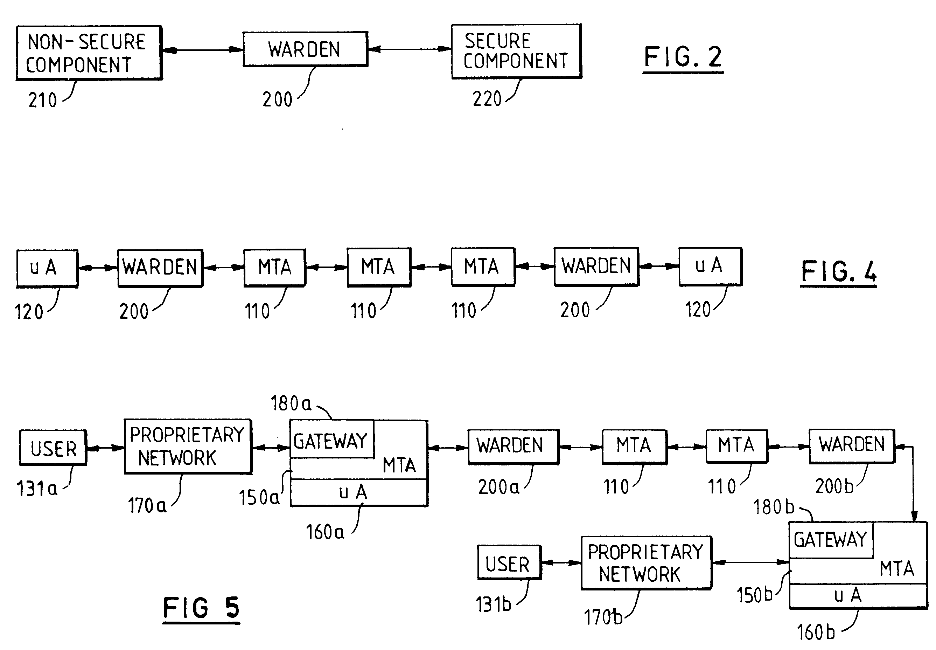

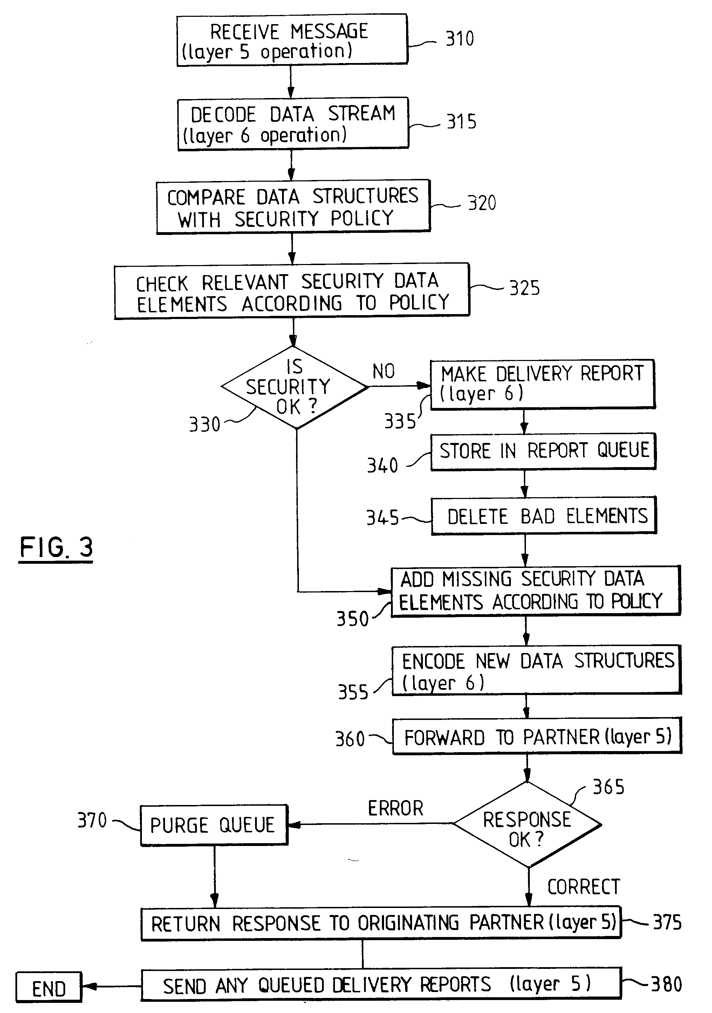

Referring now to figure 2, a warden 200, which is not defined in X.400, sits in an association, connected to the two Message Handling System components 210, 220 at each end of that association. The warden acts with and reacts to one component as if it were the other. This means the Message Handling System components do not notice that there is a non-X.400 component in the network.

It is assumed in the following that warden is protecting a non-secure Message Handling System component 210, and the other Message Handling System component 220 is secure, which can be either non-secure but protected by another warden, or a component which implements the security functions directly.

When the warden 200 starts, it has no association with either of the Message Handling System components 210, 220 to which it is connected. When one component needs to communicate with the other, it starts an association using the session layer, layer 5, OSI stack component with what it believes is the other component. In fact it is the warden, which in turn starts an association with the other Message Handling System component. The other component either returns a confirmation or an error, and the warden passes it back to the association initiator. From now on, the warden will receive data from one of the two partners. If it comes from the non-secure partner it protects, the warden will add data elements which are required for the other partner to perform the relevant security functions.

Conversely, data from the secure partner will contain elements for the security functions; the warden performs the required processing, and either rejects the data if it detects a security violation, or passes it to the non-secure partner. The warden will change the data elements, either removing the security elements, or marking them non-critical. This is a X.400 feature which allows an Message Handling System component to ignore data elements if it does not offer the relevant services. A warden may have several roles, depending on the direction of message flow, and on whether the non-secure component which it protects is a UA, a MS, an MTA or a gateway. When it protects a UA, an MS or a gateway, it acts for one of the two ends of the message transfer, and therefore performs the end to end security function, whereas for an MTA it performs only hop to hop security functions. Irrespective of its role, the warden's processing follows one of two patterns depending on which partner sends it mail.

Referring now to figure 3, a warden message process will be described. In step 310 the warden receives data from one of the two partners. Such partner can be either a non-secure node protected by the warden or an unprotected secure node.

If the mail comes from the protected non-secure partner, in step 315 the warden decodes the data structure using the OSI presentation layer (layer 6) services. In step 320, its processing is now defined by the security policy in force. This policy specifies:

- restrictions on the values some data elements may have, such as restricting the permitted security classifications to unmarked, unrestricted, and restricted;
- the choice of coding options to support some security services, such as the creation of digital signatures to support origin authentication;
- the choice of algorithms for generating such security data elements, such as the digital signature and ciphering;
- the processing the warden performs, such as ciphering the entire message and then generating a new digital envelope with different information to support double enveloping.

The warden includes a set of control files containing different security profiles which define various levels of security functions, as previously described. Preferably, the security manager of the network is able to edit such control files to modify the stored security profiles according to new security constraints.

In step 325, the warden checks some data elements according to the security policy. If, in step 330, a conflict is detected, the control is passed to step 335, where the warden generates one or more delivery reports to return to the sender to explain the error. In step 340, the warden places any such reports on a queue. Then in step 345 the bad elements of the message are deleted. If there was no conflict detected in step 330 the warden omits steps 340 and 245 making and queuing no delivering reports. In step 350, if all or part of the message is still acceptable, data elements, which are required for the other partner to perform the relevant security functions, are added. Therefore, in step 355 it rebuilds the data stream using the presentation layer services, and then, in step 360, it forwards this data stream, together with the changes required by the security policy, to the other association partner. In step 365, if the partner responds with an error report, the warden in step 370 deletes any delivery reports and then, in step 375, returns the error indication to the protected partner, ending the process in step 390.

Conversely, if, in step 365, the partner responds with a successful indication, the warden, in step 375, returns that to the protected partner. Then, in step 380, follows it with the queued delivery reports, if any, ending the process in step 390. In this way, the protected partner gets the indications and reports from the warden which it expects from the secure partner and, at the same time, the secure partner receives mail from the warden which it expects from a secure partner. Thus neither can detect the warden's presence in the link between them.

Referring back to step 310, if the mail comes from the unprotected secure partner, again the warden decodes the data stream in step 315. Now, in step 320, it compares the data structures of the message with the security policy. Then in step 325, it checks the data elements according to the security policy and the X.400 definitions of those data elements. If it finds problems, in step 330, the control is passed to step 325 to build delivery reports as before, and preferably, it generates security violation alerts on the security manager's display terminal. In step 340, the warden places any such reports on a queue. Therefore, in step 345, it deletes the elements which caused the problem, so the remaining parts will be processed correctly. As before, if there is no problem the warden generates no delivery reports, omitting steps 340 and 345. It modifies, in step 350, the data stream to mark all of the security data elements as not critical for whatever process is about to occur (delivery, transfer etc.). Then in step 355 it encodes the new data and sends, in step 360, this version to the protected non-secure partner. That partner ignores the non-critical elements, and processes the mail as if it came from a non-secure system. The rest of the process is the same as that for mail from the protected partner. The component protected by the warden thus thinks it has an association with another non-secure component. The unprotected secure component thinks it has an association with a secure component. Again, neither can detect the presence of the warden.

The process disclosed is implemented by a suitable software program which runs on suitable general purpose hardware. However, dedicated hardware could be used to carry out the same process.

Referring now to figure 4, an example of communication between two users, whose UAs 120 are connected directly to a chain of MTAs 110 where the UAs 120 are not secure, but have warden protection, is described.

It is assumed that the intermediate MTAs 110 are all secure: if not, they could be protected by wardens.

EP 0 680 187 A2

However, this is not too significant a difference, as the only security services at intermediate an intermediate MTA 110 are the hop to hop ones which essentially protect the network. The end to end services protect the user, and these are provided by wardens 200 at each end of the associations. In this case, when the sending UA 120 submits mail to its connected MTA 110, the security policy tells the warden to:

1) add a security label marking the mail Confidential;

2) cipher the contents using a particular key and cipher algorithm. The intended recipient would need to tell the sender's security manager the details of the key and cipher algorithms which the recipient can use;

3) add a digital signature, again using a key and algorithm chosen by the recipient. Optionally, the security policy may instead control the acceptable algorithms and keys as a bilateral agreement.

When the mail passes through the associations between the MTAs 110, they check the security label is allowed in the security context. When the final MTA 110 delivers the mail, the recipient's warden 200 intercepts it. It will:

1) again check the security label;

2) check the digital signature. If it is incorrect, it alerts the security manager;

3) deciphers the contents using the agreed key;

4) if all is well, it removes the security label and digital signature, and delivers the mail to the UA 120. If not, it generates the appropriate error condition and returns it to the MTA 110 as if it came from the UA 120.

In Figure 5, an example of communication between proprietary network users connected through an X.400 gateway, is now described.

Gateway 180 appears to the Message Handling System as if it were an MTA 150 with several attached UAs 160. It is not possible to place a warden 200 between UA 160 and the MTA 150 because the communication between them uses network protocols different from X.400. So the warden has to be put between gateway 180 and the next MTA 110. Warden 200 therefore acts both for the MTA 150 and for the UA 160. When the user 131a submits mail, gateway 180a converts it to X.400 and transfers it over the association from MTA 150a to warden 200a. Warden 200a first acts for the UA 160a, ciphering the data and adding the security data elements as before. It then acts for the MTA 150a, and checks the security label, before transferring the results to the next MTA 110. The final MTA 110 transfers the mail to warden 200b next to the delivering gateway 180b. Warden 200b acts first for the MTA 150b, and checks the security label. Then warden 200b acts for the UA 160b, as above, checking signatures and deciphering the contents. If all is well, it transfers the result to gateway 180b which in turn delivers the mail to the user 131b. If warden 200b detects an error, it generates the delivery report which an MTA 150b would have generated had the error been detected by a UA 160b attached to that MTA 150b. Warden 200b generates this delivery so it appears to be generated by the gateway 180b which would itself have generated as if in response to an error indication from a UA 160b, as required by X.400.

In a second embodiment, the warden contains an MTA component instead of protecting a non secure MTA. In this case the warden can act not only to protect an MTA, or MTA and MS, but also to protect a UA. Therefore a warden which contains an MTA replaces a secure, or non secure, MTA, thereby providing protection for the attached UAs, whilst a secure MTA cannot. This embodiment allows a security policy to be used which requires input from the user at the UA, because including an MTA in the warden, it becomes a store and forward node and the communication can complete before the warden asks any question. This enables more powerful and useful security policies to be used.

A security device (warden) for data communications networks has been described. It is a new component in a Message Handling System (MHS), which performs all the X.400 security functions, while not performing any other X.400 functions. This allows a MHS to be constructed in which the X.400 components provide all of the electronic mail functions, except security, while the warden provides all of the security functions. The warden (200) sits in an association, connected to the two MHS components (210, 220) at each end of that association and it protects the non-secure MHS component (210), while the secure component (220) can be either non-secure but protected by another warden or a component which implements the security functions directly. The warden acts with and reacts to one component as if it were the other. This means the MHS components do not notice that there is a non-X.400 component in the network.

## Claims

1. A security device adapted for connection between a first node (210) and a second node (220) in a data communications network supporting a predefined communication standard, the device (200) being responsive to control data in messages passed between the first node (210) and the second node (220) to perform, on behalf of the first node (210), security functions defined by a security policy agreed between

9

users of the first and second nodes, so that the combination of the device (200) and the first node (210) appears to the second node as a node of the network in which the security functions are implemented according to the security policy.

2. A security device as claimed in claim 1, comprising means (110) being responsive to store and forward the received messages.

3. A security device as claimed in claim 1 for use in a network wherein messages are interchanged according to a security policy comprising a selection of security functions defined in the communication standard.

4. A security device as claimed in claim 1 comprising programmable means responsive to control data in messages passed between the first node (210) and the second node (220) to perform the security functions.

5. A security device as claimed in claims 3 and 4 wherein the programmable means include a control file, wherein security data are stored, to implement the security functions according to the security policy.

6. A security device as claimed in claim 5 comprising means enabling an user to edit the control file to modify the security data, to implement the security functions according to a different security policy.

7. A security device as claimed in claim 3 for use in a network wherein messages are interchanged according to a security policy comprising a selection of security functions defined according to X.400 communication standard.

8. A data communications network comprising a security device as claimed in any previous claim connected between a first node (210) and a second node (220) of the network, wherein said first node (210) is a node (120) which separates the user from the rest of the network.

9. A data communications network comprising a security device as claimed in any of claims 1 to 7 connected between a first node (210) and a second node (220) wherein said first node is a gateway (180).

EP 0 680 187 A2

FIG. 1A

FIG. 1B

FIG. 2

NON-SECURE COMPONENT 210 → WARDEN 200 → SECURE COMPONENT 220

FIG. 4

uA 120 — WARDEN 200 — MTA 110 — MTA 110 — MTA 110 — WARDEN 200 — MTA 110 — WARDEN 200 — uA 120

FIG 5

USER 131a — PROPRIETARY NETWORK 170a — GATEWAY 180a (uA 160a / MTA) 150a — WARDEN 200a — MTA 110 — MTA 110 — WARDEN 200b — GATEWAY 180b (MTA / uA 160b) 150b — PROPRIETARY NETWORK 170b — USER 131b

**FIG. 3**

```
        ┌─────────────────────────┐
        │   RECEIVE MESSAGE        │── 310
        │  (layer 5 operation)     │
        └─────────────────────────┘
                   │
                   ▼
        ┌─────────────────────────┐
        │  DECODE DATA STREAM      │── 315
        │  (layer 6 operation)     │
        └─────────────────────────┘
                   │
                   ▼
        ┌─────────────────────────┐
        │  COMPARE DATA STRUCTURES │── 320
        │   WITH SECURITY POLICY   │
        └─────────────────────────┘
                   │
                   ▼
        ┌─────────────────────────┐
        │ CHECK RELEVANT SECURITY  │── 325
        │  DATA ELEMENTS           │
        │  ACCORDING TO POLICY     │
        └─────────────────────────┘
```

```
                 ◇ IS                NO      ┌──────────────────────────┐
                   SECURITY  ──────────────▶ │  MAKE DELIVERY REPORT     │
                   OK ?                       │  (layer 6)                │
              330                             └──────────────────────────┘
                                           335           │
                                                         ▼
                                              ┌──────────────────────────┐
                                         340  │  STORE IN REPORT QUEUE    │
                                              └──────────────────────────┘
                                                         │
                                                         ▼
                                              ┌──────────────────────────┐
                                         345  │   DELETE BAD ELEMENTS     │
                                              └──────────────────────────┘
                                                         │
                                                         ▼
                                              ┌──────────────────────────┐
                                              │  ADD MISSING SECURITY     │
                                              │  DATA ELEMENTS            │
                                         350  │  ACCORDING TO POLICY      │
                                              └──────────────────────────┘
                                                         │
                                                         ▼
                                              ┌──────────────────────────┐
                                              │  ENCODE NEW DATA          │
                                         355  │  STRUCTURES (layer 6)     │
                                              └──────────────────────────┘
                                                         │
                                                         ▼
                                         360  ┌──────────────────────────┐
                                              │ FORWARD TO PARTNER(layer5)│
                                              └──────────────────────────┘
```

```
                                                          365
   ┌───────────────┐      ERROR              ◇ RESPONSE
370│ PURGE QUEUE   │◀──────────────────────── OK ?
   └───────────────┘                            │
         │                                   CORRECT
         │                                       │
         ▼                                       ▼
   ┌────────────────────────────────────────────────────────┐
   │ RETURN RESPONSE TO ORIGINATING PARTNER (layer 5)        │── 375
   └────────────────────────────────────────────────────────┘
                            │
                            ▼
   ┌───────┐    ┌────────────────────────────────────────────┐
   │  END  │◀───│ SEND ANY QUEUED DELIVERY REPORTS (layer 5) │── 380
   └───────┘    └────────────────────────────────────────────┘
```